# EUROPEAN PATENT APPLICATION

(11) **EP 4 804 317 A1**
(43) Date of publication of application: **09.09.2026**
(21) Application number: 24950990.2
(22) Date of filing: 14.08.2024
(51) Int. Cl.: H01M 50/451, H01M 10/0525, H01M 50/434, H01M 50/403

(54) **SEPARATOR, PREPARATION METHOD THEREFOR, AND BATTERY**

(71) Applicant: Shenzhen Senior Technology Material Co., Ltd., Shenzhen, Guangdong 518106 (CN)
(72) Inventor: TAN, Bin, Shenzhen, Guangdong 518106 (CN); WANG, Yanjie, Shenzhen, Guangdong 518106 (CN); QIAN, Cheng, Shenzhen, Guangdong 518106 (CN); LIAO, Zhiheng, Shenzhen, Guangdong 518106 (CN)
(74) Representative: J A Kemp LLP
(86) International application number: PCT/CN2024/112196
(87) International publication number: WO 2026/036305

(57) **Abstract**

The present application provides a separator, a preparation method therefor, and a battery. The separator includes a base film and a lithium supplementing layer located on a surface of at least one side of the base film, and a lithium element content in the lithium supplementing layer is 100-20000 ppm. According to the present application, the separator can be used for lithium supplementation of batteries, thereby reducing battery internal resistance and improving battery performance such as first-cycle coulombic efficiency and cycle life.

## Description

### TECHNICAL FIELD

The present application relates to the field of lithium-ion batteries, in particular to a separator, a preparation method therefor and a battery.

### BACKGROUND

Lithium-ion batteries are common electrochemical devices with wide applications. For example, they are widely used in new energy vehicles, high-end digital products, and other fields. Because a solid electrolyte interface film (SEI film) forms on a surface of a negative electrode during a first charge-discharge process of a lithium-ion battery, active lithium ions in the lithium-ion battery are consumed, resulting in irreversible lithium loss, leading to irreversible capacity loss of the lithium-ion battery, and causing a decrease in the capacity of the lithium-ion battery.

For example, currently, the irreversible capacity loss of graphite negative electrodes can reach about 10%, while the irreversible capacity loss of silicon-doped negative electrodes (negative electrodes doped with silicon negative electrode materials or adopting silicon negative electrode materials) can usually be as high as more than 30%. Among them, with the development of technologies such as new energy vehicles and high-end digital products, etc., higher requirements are put forward for the performance of lithium-ion batteries, such as energy density, cycle life, safety, etc. Compared with graphite negative electrodes, silicon-doped negative electrodes have higher capacity, so silicon-doped negative electrodes have gradually attracted widespread attention. However, the high irreversible lithium loss generated by silicon-doped negative electrodes during battery cycling limits their application.

With the development of science and technology, increasingly high requirements have been placed on lithium-ion battery performance such as cycle life, etc., which requires effective lithium supplementation for batteries during the battery charge and discharge process to alleviate problems such as reduced battery capacity and short cycle life caused by irreversible lithium loss. Although lithium supplementation of electrode sheets (such as lithium supplementation for a positive or negative electrode) can compensate to a certain extent for irreversible lithium loss generated during the battery charge and discharge cycle process, this type of lithium supplementation method generally faces problems such as residue retention in electrode sheets, high processing difficulty in lithium supplementation of electrode sheets, and the structure or strength of the electrode sheet being affected, which limits its application.

Therefore, how to perform effective lithium supplementation for batteries to reduce battery internal resistance, and improve battery performance, such as first-cycle coulombic efficiency and cycle life, is still a technical problem urgently needing to be solved by those skilled in the art.

### SUMMARY

The present application provides a separator, a preparation method therefor and a battery, which can perform effective lithium supplementation for a battery to reduce battery internal resistance, and improve battery performance, such as first-cycle coulombic efficiency and cycle life, thereby effectively overcoming the defects existing in the prior art.

In one aspect of the present application, a separator is provided, which includes a base film and a lithium-supplementing layer located on a surface of at least one side of the base film, where a lithium element content in the lithium-supplementing layer is 100 ppm-20000 ppm.

According to an embodiment of the present application, the lithium element content of the lithium-supplementing layer is 500 ppm-10000 ppm.

According to an embodiment of the present application, the lithium-supplementing layer includes a lithium-containing nanofiber compound; preferably, the lithium-containing nanofiber compound includes one or more of lithium sulfonate modified cellulose nanowhiskers, lithium carboxylate modified cellulose nanowhiskers, lithium sulfonate modified cellulose nanofibers, lithium carboxylate modified cellulose nanofibers, lithium sulfonate modified bacterial cellulose, lithium carboxylate modified bacterial cellulose, lithium sulfonate modified micronized-fibrous cellulose, and lithium carboxylate modified micronized-fibrous cellulose; preferably, a lithium element content in the lithium-containing nanofiber compound is 50 ppm-30000 ppm, preferably 500 ppm-20000 ppm; preferably, an average diameter of the lithium-containing nanofiber compound is 2 nm-1 µm, preferably 5 nm-200 nm; preferably, an average length of the lithium-containing nanofiber compound is 50 nm-10 µm, preferably 100 nm-5 µm; preferably, based on a total mass of the lithium-supplementing layer, a mass fraction of the lithium-containing nanofiber compound is 3%-80%.

According to an embodiment of the present application, the lithium-supplementing layer includes a polyacrylic acid-based lithium-containing binder; preferably, a lithium element content in the polyacrylic acid-based lithium-containing binder is 100 ppm-30000 ppm, preferably 500 ppm-20000 ppm; preferably, the polyacrylic acid-based lithium-containing binder includes an acrylic acid-based structural unit and an acrylamide-based structural unit; preferably, the acrylic acid-based structural unit includes one or more of an acrylic acid structural unit, a methacrylic acid structural unit, an itaconic acid structural unit, and an aconitic acid structural unit; preferably, the acrylamide-based structural unit includes one or more of an acrylamide structural unit, a methacrylamide structural unit, an N,N-dimethylacrylamide structural unit, and an N-(hydroxymethylacryl)amide structural unit; preferably, the polyacrylic acid-based lithium-containing binder is prepared by reacting a copolymer of an acrylic acid-based monomer and an acrylamide-based monomer with a lithium source; preferably, a mass ratio of the acrylic acid-based monomer to the acrylamide-based monomer is 1:9-9:1, preferably 5:5-9:1; preferably, the lithium source includes lithium hydroxide; preferably, based on the total mass of the lithium-supplementing layer, a mass fraction of the polyacrylic acid-based lithium-containing binder is 2%-10%.

According to an embodiment of the present application, the lithium-supplementing layer includes a ceramic material; preferably, the ceramic material includes one or more of aluminum oxide, boehmite, barium titanate, aluminum nitride, silicon oxide, magnesium oxide, and magnesium hydroxide; preferably, a particle size D95 of the ceramic material is ≤ 400 nm; preferably, based on the total mass of the lithium-supplementing layer, a mass fraction of the ceramic material is 10%-95%.

According to an embodiment of the present application, the lithium-supplementing layer includes a surfactant; preferably, the surfactant includes one or more of a polyether siloxane copolymer, an acetylene glycol copolymer, and a fatty alcohol polyether siloxane copolymer; preferably, based on the total mass of the lithium-supplementing layer, a mass fraction of the surfactant is 0.1%-0.8%.

According to an embodiment of the present application, a thickness of the lithium-supplementing layer is 0.3 µm-4 µm, preferably 0.5 µm-2 µm.

According to an embodiment of the present application, a thickness of the base film is 3 µm-25 µm, preferably 5 µm-12 µm.

According to an embodiment of the present application, a porosity of the base film is 20%-90%, preferably 30%-60%.

According to an embodiment of the present application, the base film includes one or more of a polypropylene film, a polyethylene film, a polyimide film, aramid, and a non-woven fabric.

According to an embodiment of the present application, a thermal shrinkage rate of the separator after being heated at 180°C ± 5°C for 1 h ± 0.1 h is less than 5%.

It should be noted that the term "±" used in the present application means that a specific value can vary within a certain range, which belongs to a normal fluctuation in an actual process. For example, the above 180°C ± 5°C means that during the measurement of the thermal shrinkage rate of the separator, a test temperature is not necessarily an exact 180°C, but can vary within a range of 175°C - 185°C, that is, the thermal shrinkage rate of the separator can be tested at any temperature between 175°C and 185°C, and the test temperature for measuring the thermal shrinkage rate of the separator can vary within the range of 175°C-185°C.

In another aspect of the present application, a preparation method for the above separator is provided, which includes the following steps: coating a lithium-supplementing slurry for forming the lithium-supplementing layer on the surface of at least one side of the base film, and drying to form the lithium-supplementing layer on the surface of at least one side of the base film, thereby obtaining the separator.

According to an embodiment of the present application, the lithium-supplementing slurry contains the lithium-containing nanofiber compound, the polyacrylic acid-based lithium-containing binder, the ceramic material and the surfactant; preferably, based on a total mass of the lithium-containing nanofiber compound, polyacrylic acid-based lithium-containing binder, ceramic material and surfactant, a mass fraction of the lithium-containing nanofiber compound is 3%-80%, a mass fraction of the polyacrylic acid-based lithium-containing binder is 2%-10%, a mass fraction of the ceramic material is 10%-95%, and a mass fraction of the surfactant is 0.1%-0.8%.

In another aspect of the present application, a battery is provided, including the above separator.

In the separator, the preparation method therefor, and the battery provided by the present application, a lithium-supplementing layer is arranged on a surface of the base film of the separator, and the lithium element content in the lithium-supplementing layer is controlled to be 100 ppm-20000 ppm to effectively supplement lithium for the battery, thereby reducing battery internal resistance, and improving battery performance such as first-cycle coulombic efficiency and cycle life.

In addition, in the present application, the arrangement of above lithium-supplementing layer on the surface of the base film of the separator realizes effective lithium supplementation for the battery, and maintains separator performance such as mechanical strength, since the lithium-supplementing layer also serves as a part of the separator, thereby realizing a balance between lithium supplementation and mechanical performance of the separator.

In addition, compared with lithium supplementation for an electrode sheet (such as lithium supplementation for a positive or negative electrode), lithium supplementation is performed on the separator (i.e., a lithium-supplementing layer is arranged on the surface of the base film of the separator) in the present application. The irreversible lithium loss caused during the battery charge and discharge is compensated by the separator. This realizes effective lithium supplementation for the battery, and also has advantages such as simple lithium supplementation process, no residue introduction in the electrode sheet, and no influence on the structure or strength of the electrode sheet, thereby further ensuring the electrochemical performance of the battery.

### BRIEF DESCRIPTION OF DRAWINGS

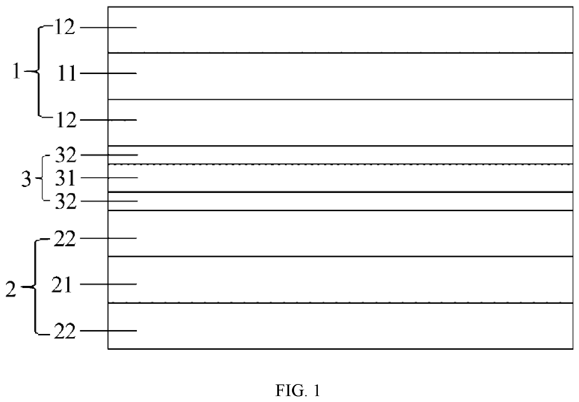

FIG. 1 is a schematic diagram of a stacked structure of a positive electrode sheet, a separator and a negative electrode sheet according to an embodiment of the present application.

Description of reference signs: 1: positive electrode sheet; 11: positive current collector; 12: positive coating; 2: negative electrode sheet; 21: negative current collector; 22: negative coating; 3: separator; 31: base film; 32: lithium-supplementing layer.

### DESCRIPTION OF EMBODIMENTS

In order to enable those skilled in the art to better understand the solutions of the present application, the present application will be described in further detail below. An embodiment of the present application provides a separator 3. As shown in FIG. 1, the separator includes a base film 31 and a lithium-supplementing layer 32 arranged on a surface of at least one side of the base film 31, and a lithium element content in the lithium-supplementing layer 32 is 100 ppm-10000 ppm.

In a battery, the separator 3 mainly functions to prevent a positive electrode sheet 1 from contacting a negative electrode sheet 2 and allow active lithium ions to migrate therethrough. Specifically, the separator 3 is spaced between the positive electrode sheet 1 and the negative electrode sheet 2 to prevent contact between the positive and negative electrodes, which otherwise causes short circuit and the resulting risks such as battery explosion. During charge and discharge cycles of the battery, active lithium ions pass through the separator 3 and migrate back and forth between the positive and negative electrodes to perform deintercalation in the positive and negative electrodes, realizing the charge and discharge process of the battery.

According to the research and analysis of the inventors, by arranging the lithium-supplementing layer 32 on the surface of the base film 31 of the separator 3 and controlling the lithium element content in the lithium-supplementing layer 32 to be 100 ppm-20000 ppm, the separator 3 can effectively release active lithium ions during charge and discharge of the battery to effectively supplement lithium for the battery. This reduces battery internal resistance, and improves battery performance such as first-time coulombic efficiency (or first-cycle coulombic efficiency) and cycle life, thereby overcoming irreversible lithium loss during charge and discharge cycles of the battery, and the resulting problems such as reduced battery capacity and short cycle life.

In addition, after long-term research, the inventors found that the lithium element content in the lithium-supplementing layer 32 not only affects the lithium supplementation effect of the separator 3, but also affects a moisture content of the lithium-supplementing layer 32. Specifically, lithium element in the lithium-supplementing layer 32 mainly exists in a form of a lithium salt, and the lithium salt is prone to absorbing moisture. Therefore, if the lithium element content in the lithium-supplementing layer 32 is too high, it easily leads to a high moisture content in the lithium-supplementing layer 32, affecting battery cycle performance. In the embodiment of the present application, by controlling the lithium element content in the lithium-supplementing layer 32 within a range of 100 ppm-20000 ppm, the moisture content of the lithium-supplementing layer 32 can be controlled while ensuring the lithium supplementation effect, avoiding the performance and service life of the battery from being affected by excessively high moisture.

Exemplarily, the lithium element content in the lithium-supplementing layer 32 may be 100 ppm, 400 ppm, 480 ppm, 500 ppm, 520 ppm, 800 ppm, 880 ppm, 1000 ppm, 1500 ppm, 2000 ppm, 2500 ppm, 2800 ppm, 3000 ppm, 3500 ppm, 4000 ppm, 4200 ppm, 4500 ppm, 5000 ppm, 6000 ppm, 7000 ppm, 8000 ppm, 9000 ppm, 10000 ppm, 20000 ppm, or a range composed of any two thereof.

In some preferred embodiments, the lithium element content in the above lithium-supplementing layer 32 may be 500 ppm-10000 ppm. Relatively speaking, the lithium element content in the lithium-supplementing layer 32 is not less than 500 ppm, which is conducive to further improving the lithium supplementation effect. If the lithium element content in the lithium-supplementing layer exceeds 10000 ppm, the battery production efficiency will be affected. In the process of battery manufacturing using the separator, a relatively long time of high-temperature baking is required to remove moisture after liquid injection, thus increasing battery production cost.

In an embodiment of the present application, unless otherwise specified, the lithium element content refers to a mass content of lithium element. The lithium element content in the lithium-supplementing layer 32 of the separator 3 in the embodiments of the present application can be measured by a conventional method in the art, for example, by an ICP (Inductively Coupled Plasma) method.

In an embodiment of the present application, the lithium-supplementing layer 32 includes a lithium-supplementing material, and the lithium-supplementing material contains lithium element, which can serve as a source of lithium ions to provide lithium ions, enabling the separator 3 to effectively release active lithium ions during the charge and discharge of the battery, thereby realizing effective lithium supplementation for the battery.

According to the research of the inventors, the lithium-supplementing material in the lithium-supplementing layer 32 may include a lithium-containing nanofiber compound. The lithium-containing nanofiber compound can effectively release active lithium ions during the charge and discharge cycles of the battery to realize effective lithium supplementation for the battery. Meanwhile, the lithium-containing nanofiber compound has a one-dimensional nanostructure. The one-dimensional nanostructure, as a constituent material of the separator 3, not only forms a more tightly stacked structure to enhance properties such as the strength of the separator 3, for example improving the performance such as the thermal shrinkage resistance of the separator 3, but also facilitates the formation of sufficient contact points to provide more sufficient transmission paths for the transmission of lithium ions, thereby further ensuring the electrochemical performance and safety performance of the battery.

Upon further research, the lithium-containing nanofiber compound may include a nanofiber compound modified by lithium sulfonate and/or lithium carboxylate, that is, the lithium-containing nanofiber compound may include a lithium sulfonate-modified nanofiber compound, a lithium carboxylate-modified nanofiber compound, and a lithium-sulfonate-and-lithium-carboxylate-modified nanofiber compound. By introducing the nanofiber compound modified by lithium sulfonate and/or lithium carboxylate into the lithium-supplementing layer 32, it is beneficial to release active lithium ions, thereby realizing the lithium supplementation effect for the battery, and improving properties such as the strength of the separator 3.

In an embodiment of the present application, a fiber raw material can be modified by lithium sulfonate and/or lithium carboxylate by a conventional method to prepare the nanofiber compound modified by lithium sulfonate and/or lithium carboxylate.

For example, a preparation process for the lithium sulfonate-modified nanofiber compound may include: oxidizing a fiber raw material with sulfuric acid, and then neutralizing with lithium hydroxide (LiOH) to obtain the lithium sulfonate-modified nanofiber compound. Where the fiber raw material includes, for example, cotton.

For example, a preparation process for the lithium carboxylate-modified nanofiber compound may include: (1) performing etherification reaction on a fiber raw material and a chloroacetate under an alkaline condition to obtain an acetate-grafted fiber material; (2) performing displacement reaction between the acetate-grafted fiber material and an acid, such that acetate in the acetate-grafted fiber material forms acetic acid, thereby obtaining an acetic acid-based fiber material; (3) performing neutralization reaction on the acetic acid-based fiber material and lithium hydroxide (LiOH) to obtain the lithium carboxylate-modified nanofiber compound.

Among them, in step (1), the chloroacetate used may specifically include sodium chloroacetate. When the etherification reaction is performed, the alkaline condition may be provided by sodium hydroxide (NaOH), and the obtained acetate-grafted fiber material is a sodium acetate-grafted fiber material. That is, in step (1), the fiber raw material and sodium chloroacetate may be subjected to the etherification reaction in the presence of NaOH to obtain a sodium acetate-grafted fiber material. Where the fiber raw material used includes, for example, cotton.

In step (2), when the displacement reaction is performed, the strength of the acid used is stronger than that of acetic acid, and the acid used may specifically include sulfuric acid. That is, the acetate-grafted fiber material may be reacted with sulfuric acid (displacement reaction), such that acetate in the acetate-grafted fiber material forms acetic acid, thereby obtaining the acetic acid-based fiber material.

Specifically, the nanofiber compound is an organic nanofiber compound. The organic nanofiber compound may include a cellulose nanofiber compound, such as one or more of cellulose nanowhiskers, cellulose nanofibers, bacterial cellulose fibers, and micronized-fibrous cellulose (MFC). The surface of the cellulose nanofiber compound has sufficient reaction active sites that are conducive to the modification reaction with a lithium compound and beneficial to the stability of lithiation grafting, and that cooperate with the one-dimensional nanostructure of the cellulose nanofiber compound, thereby improving lithiation grafting density of the compound. By modifying such cellulose nanofiber compound with lithium sulfonate and/or lithium carboxylate, a corresponding lithium sulfonate and/or lithium carboxylate-modified nanofiber compound is obtained, and then the lithium sulfonate and/or lithium carboxylate-modified nanofiber compound is introduced into the lithium-supplementing layer 32 of the separator 3, thereby improving the lithium content density of the separator 3. This facilitates the separator 3 to effectively release active lithium ions during the battery charge and discharge process, thereby improving the lithium supplementation effect, while balancing the improvement of the properties such as strength of the separator 3. In some preferred embodiments, the lithium-containing nanofiber compound may include one or more of lithium sulfonate-modified cellulose nanowhiskers, lithium carboxylate-modified cellulose nanowhiskers, lithium sulfonate-modified cellulose nanofibers, lithium carboxylate-modified cellulose nanofibers, lithium sulfonate-modified bacterial cellulose, lithium carboxylate-modified bacterial cellulose, lithium sulfonate-modified micronized-fibrous cellulose, and lithium carboxylate-modified micronized-fibrous cellulose. By introducing such lithium-containing nanofiber compound into the lithium-supplementing layer 32 of the separator 3, it is more conducive for the separator 3 to effectively release active lithium ions during the battery charge and discharge process, thereby improving the lithium supplementation effect, while balancing the improvement of the properties such as strength of the separator 3.

Generally, the lithium-containing nanofiber compound has a nanometer-scale diameter, that is, an average diameter of the lithium-containing nanofiber compound in the lithium-supplementing layer 32 is less than or equal to 1 µm. Thus, the introduction of the lithium-containing nanofiber compound into the lithium-supplementing layer 32 of the separator 3 is conducive to the separator 3 effectively releasing active lithium ions during the battery charge and discharge process, improving the lithium supplementation effect. Meanwhile, the average diameter of the lithium-containing nanofiber compound being less than or equal to 1 µm is conducive to reducing the thickness of the lithium-supplementing layer 3, reducing the influence on the air permeability of the separator 3, while also reducing the thickness of the separator 3, and shortening transmission paths of lithium ions in the separator 3. Moreover, the nanoscale average diameter is further conducive to improving the lithium content density of the separator, thereby reducing battery impedance, and improving battery performance such as first-cycle coulombic efficiency, and cycle life.
Further comprehensively considering factors such as the lithium supplementation effect, impedance, mechanical properties of the separator 3, the average diameter of the lithium-containing nanofiber compound may be 2 nm-1 µm, for example, 2 nm, 5 nm, 10 nm, 50 nm, 70 nm, 100 nm, 150 nm, 200 nm, 300 nm, 400 nm, 500 nm, 600 nm, 700 nm, 800 nm, 900 nm, 1 µm, or a range composed of any two thereof, and further preferably 5 nm-200 nm.

Generally, the separator 3 can be prepared by a coating method, that is, a lithium-supplementing slurry for forming the lithium-supplementing layer 32 is coated on a surface of the base film 31 to form the lithium-supplementing layer 32, thereby preparing the separator 3. Where the lithium-supplementing slurry contains a lithium-containing nanofiber compound. The sizes such as diameter and length of the lithium-containing nanofiber compound affect not only the effective release of active lithium ions from the separator 3 during battery discharge, but also the preparation efficiency and yield of the separator 3.

Upon further research, comprehensively considering factors such as the lithium supplementation effect, mechanical strength, preparation efficiency and yield of the separator 3, an average length of the lithium-containing nanofiber compound is preferably 50 nm-10 µm, such as 50 nm, 80 nm, 100 nm, 150 nm, 200 nm, 500 nm, 1 µm, 1.5 µm, 2 µm, 2.5 µm, 3 µm, 3.5 µm, 4 µm, 4.5 µm, 5 µm, 6 µm, 7 µm, 8 µm, 9 µm, 10 µm, or a range composed of any two thereof. Selecting an appropriate average length for the lithium-containing nanofiber compound is beneficial for achieving a balance between the improvement of mechanical properties such as separator strength and the provision of an appropriate lithiation grafting space for achieving a good lithium supplementation 5 effect, and further optimizes the pulping quality, coating efficiency and yield of the lithium-supplementing slurry. The average length of the lithium-containing nanofiber compound is further preferably 100 nm-5 µm.

In an embodiment of the present application, parameters such as the average diameter and average length of the lithium-containing nanofiber compound can be measured by a conventional method in the art. For example, Scanning Electron Microscope (SEM) may be used to measure parameters such as average diameter and average length of the lithium-containing nanofiber compound in the lithium-supplementing layer 32.

According to the research of the inventors, a lithium element content in the lithium-containing nanofiber compound is preferably 50 ppm-30000 ppm, such as 50 ppm, 100 ppm, 500 ppm, 1000 ppm, 2000 ppm, 3000 ppm, 4000 ppm, 5000 ppm, 8000 ppm, 10000 ppm, 13000 ppm, 15000 ppm, 17000 ppm, 18000 ppm, 20000 ppm, 25000 ppm, 30000 ppm, or a range composed of any two thereof. The lithium element content in the lithium-containing nanofiber compound within an appropriate range not only ensures the lithium supplementation effect of the separator and further helps avoid the influence of excessive lithium content in the nanofiber on moisture content, but also helps ensure the inclusion of an appropriate crystalline content in the lithium-containing nanofiber compound, thereby further improving heat resistance of the separator 3, and thus improving electrochemical safety, cycle performance. etc. Further, the lithium element content in the lithium-containing nanofiber compound is preferably 500 ppm-20000 ppm.

In specific implementation, during the modification of a nanofiber compound with lithium sulfonate and/or lithium carboxylate, the lithium element content in the obtained nanofiber compound modified with lithium sulfonate and/or lithium carboxylate (lithium-containing nanofiber compound) can be controlled by adjusting conditions such as a dosage of lithium sulfonate and/or lithium carboxylate.

In an embodiment of the present application, the lithium-supplementing material in the lithium-supplementing layer 32 may further include a polyacrylic acid-based lithium-containing binder. On the one hand, the polyacrylic acid-based binder can play a bonding role, improving the adhesion between various components in the lithium-supplementing layer 32 (such as the lithium-containing nanofiber compound, etc.) and the adhesion between the lithium-supplementing layer 32 and the base film 31, thereby improving the structural stability of the separator 3 and further ensuring properties such as the thermal shrinkage resistance of the separator 3. On the other hand, the polyacrylic acid-based lithium-containing binder can serve as a source of lithium ions, enabling the separator 3 to effectively release active lithium ions during the battery charge and discharge process, further improving the lithium supplementation effect.

Upon further research, the polyacrylic acid-based lithium-containing binder may include an acrylic acid-based structural unit and an acrylamide-based structural unit. Where the acrylic acid-based structural unit refers to a structural unit formed after polymerization of an acrylic acid-based monomer, and the acrylamide-based structural unit refers to a structural unit formed after polymerization of an acrylamide-based monomer.

Specifically, the polyacrylic acid-based lithium-containing binder can be prepared by reacting a copolymer of an acrylic acid-based monomer and an acrylamide-based monomer with a lithium source, that is, the polyacrylic acid-based lithium-containing binder can be prepared according to a process including the following steps: performing a polymerization reaction (or copolymerization reaction) between an acrylic acid-based monomer and an acrylamide-based monomer to obtain a copolymer; and then reacting the copolymer with a lithium source to prepare the polyacrylic acid-based lithium-containing binder. After the polymerization reaction, the acrylamide-based monomer forms an acrylamide-based structural unit and the acrylic acid-based monomer forms an acrylic acid-based structural unit in the polyacrylic acid-based lithium-containing binder. After the reaction of the copolymer with the lithium source, the acrylic acid-based structural unit forms a lithium acrylate structural unit in the polyacrylic acid-based lithium-containing binder, thereby enabling the polyacrylic acid-based lithium-containing binder to include both the acrylic acid-based structural unit and the acrylamide-based structural unit, where the acrylic acid-based polymerization unit mainly includes the lithium acrylate structural unit.

Specifically, the lithium source may include lithium hydroxide (LiOH). During the preparation of the polyacrylic acid-based lithium-containing binder, copolymerization of the acrylic acid-based monomer and the acrylamide-based monomer is performed, and then neutralization is performed with LiOH (i.e., the copolymer reacts with LiOH). This mainly causes the acrylic acid-based structural unit therein to form the lithium acrylate structural unit, thereby preparing the polyacrylic acid-based lithium-containing binder.

Specifically, the acrylic acid-based structural unit may include one or more of an acrylic acid structural unit (structural unit formed after polymerization of an acrylic acid monomer), a methacrylic acid structural unit (structural unit formed after polymerization of a methacrylic acid monomer), an itaconic acid structural unit (structural unit formed after polymerization of an itaconic acid monomer), and an aconitic acid structural unit (structural unit formed after polymerization of an aconitic acid monomer).

Accordingly, during the preparation of the polyacrylic acid-based lithium-containing binder, the acrylic acid-based monomer used may include one or more of acrylic acid, methacrylic acid, itaconic acid, and aconitic acid.

In addition, the acrylamide-based polymerization unit may include one or more of an acrylamide structural unit (structural unit formed after polymerization of an acrylamide monomer), a methacrylamide structural unit (structural unit formed after polymerization of a methacrylamide monomer), an N,N-dimethylacrylamide structural unit (structural unit formed after polymerization of an N,N-dimethylacrylamide monomer), and an N-hydroxymethylacrylamide structural unit (structural unit formed after polymerization of an N-hydroxymethylacrylamide monomer).

Accordingly, during the preparation of the polyacrylic acid-based lithium-containing binder, the acrylamide monomer used may include one or more of acrylamide, methacrylamide, N,N-dimethylacrylamide, and N-hydroxymethylacrylamide.

In an embodiment of the present application, characteristics of the acrylic acid-based structural unit and the acrylamide-based structural unit in the polyacrylic acid-based lithium-containing binder in the lithium-supplementing layer 32 can be detected by a method such as infrared spectroscopy, mass spectrometry.

In some embodiments, in the polyacrylic acid-based lithium-containing binder, a mass ratio of the acrylic acid-based structural unit to the acrylamide-based structural unit may be 1:9-9:1, for example 9:1, 8:2, 7:3, 6:4, 5:5-4:6, 3:7, 2:8, 1:9, or a range composed of any two thereof, and further preferably 5:5-9:1. By controlling the mass ratio of the acrylic acid-based structural unit to the acrylamide-based structural unit within the above range, it is beneficial to further improvement of lithium supplementation effect, improvement of the binding property among various components in the lithium-supplementing layer 32 and the binding property between the lithium-supplementing layer 32 and the base film 31, thereby improving properties such as the structural stability of the separator 3, and simultaneously accommodating the reduction of the moisture content of the separator 3 and thus improving the electrochemical performance of the battery.

In specific implementation, during the preparation of the polyacrylic acid-based lithium-containing binder, dosages of the acrylic acid-based monomer and the acrylamide-based monomer can be adjusted so that a mass ratio of the acrylic acid-based monomer to the acrylamide-based monomer is 1:9-9:1, for example, 9:1, 8:2, 7:3, 6:4, 5:5, 4:6, 3:7, 2:8, 1:9, or a range composed of any two of them, preferably 5:5-9:1, so that the acrylic acid-based structural unit and acrylamide-based structural unit in the prepared polyacrylic acid-based lithium-containing binder also basically satisfy this mass ratio.

In some embodiments, a content of lithium element in the polyacrylic acid-based lithium-containing binder may be 100 ppm-30000 ppm, for example 100 ppm, 400 ppm, 480 ppm, 500 ppm, 520 ppm, 880 ppm, 1000 ppm, 2800 ppm, 3000 ppm, 4120 ppm, 4200 ppm, 5000 ppm, 8000 ppm, 9940 ppm, 10000 ppm, 12000 ppm, 14000 ppm, 16000 ppm, 18000 ppm, 20000 ppm, 30000 ppm, or a range composed of any two thereof, and further preferably 500 ppm-20000 ppm. This is conducive to further improving the lithium supplementation effect, and simultaneously accommodating the reduction of the moisture content of the lithium-supplementing layer 32 and thus improving service performance of the battery.

In specific implementation, during the preparation of the polyacrylic acid-based lithium-containing binder, conditions such as the dosages of the acrylic acid-based monomer and the lithium source can be adjusted to regulate the lithium element content in the prepared polyacrylic acid-based lithium-containing binder.

In an embodiment of the present application, the lithium-supplementing layer 32 may further include a ceramic material, which is conducive to balancing and improving properties such as the permeability of the separator 3, and thermal stability of the separator 3, thereby improving ion conductivity and electrochemical safety.

According to the research of the inventors, in the lithium-supplementing layer 32, in a coexisting system of components such as the lithium-containing nanofiber compound, the polyacrylic acid-based lithium-containing binder and the ceramic material, respective components can synergistically play the following roles that (1) the lithium-containing nanofiber compound and the polyacrylic acid-based lithium-containing binder serve as lithium sources to provide active lithium ions to compensate for irreversible lithium loss during the battery charge and discharge process, improve battery first-cycle coulombic efficiency, reduce battery internal resistance, and improve battery cycle performance; (2) components such as the lithium-containing nanofiber compound and the ceramic material interweave to form a network structure, while the polyacrylic acid-based lithium-containing binder bonds respective components and bonds the network structure formed by interweaving respective components with the base film 31 into an integrated whole, thereby significantly improving the stability and permeability of the separator 3, especially further improving properties such as dimensional stability of the separator 3 under high temperature conditions, inhibiting thermal shrinkage of the separator 3 (a thermal shrinkage rate of the separator 3 after being heated at 180°C ± 5°C for 1 h ± 0.1 h can be less than 5%), avoiding problems such as battery thermal runaway caused by thermal shrinkage of the separator 3, and thus improving safety and cycle performance of the battery; (3) the ceramic material serves as a heat-resistant filler to further improve properties such as permeability, heat resistance of the separator 3.

Specifically, the ceramic material is granular, that is, the ceramic material is an inorganic ceramic particle powder.

Generally, there is no particular limitation on particle size of the ceramic material, but in order to form a film with uniform thickness and appropriate porosity, a particle size D95 of the ceramic material is preferably ≤ 800 nm. According to further research of the inventors, it was found that the particle size D95 of the ceramic particles being ≤ 400nm is conducive to further improving performance such as cycle life, safety of the battery. The reason is that the ceramic material has a relatively small particle size, which can improve heat resistance of the separator 3 and reduce a thickness of the lithium-supplementing layer 32, thereby reducing a thickness of the separator 3 and helping to improve an energy density of the battery. In addition, the use of a one-dimensional nanomaterial as the lithium-containing nanofiber compound and the use of the ceramic material with D95 ≤ 400 nm are more conducive to pairing with the lithium-containing nanofiber compound. While forming a thinner lithium-supplementing layer 32, this helps components such as the lithium-containing nanofiber compound and the ceramic material in the lithium-supplementing layer 32 to interweave into a network structure, thereby further improving properties such as the permeability and thermal stability of the separator 3, thus improving battery performance such as cycle performance and safety.

In some embodiments, the particle size D95 of the ceramic particles may be 40 nm - 400 nm, such as 40 nm, 50 nm, 70 nm, 100 nm, 150 nm, 200 nm, 250 nm, 300 nm, 350 nm, 400 nm, or a range composed of any two thereof.

Where the particle size D95 of the ceramic material refers to a particle size at which a cumulative volume reaches 95% from the fine particle side in a volume-based particle size distribution. The particle size D95 of the ceramic material in an embodiment of the present application can be measured by a conventional method in the art, for example, it can be tested using a conventional particle size analyzer in the art, or features such as particle sizes of ceramic particles in the lithium-supplementing layer 32 can be detected using an electron microscope such as a Scanning Electron Microscope (SEM).

Specifically, the ceramic material may include one or more of aluminum oxide, boehmite, barium titanate, aluminum nitride, silicon oxide, magnesium oxide, and magnesium hydroxide.

In some embodiments, the lithium-supplementing layer 32 may further include a surfactant, which can play a role of wetting and leveling, facilitating the formation of the lithium-supplementing layer 32 and the surface flatness of the lithium-supplementing layer 32.

Specifically, the lithium-supplementing layer 32 can be formed by a coating method, that is, a lithium-supplementing slurry for forming the lithium-supplementing layer 32 is coated on the surface of at least one side of the base film 31, and after processing such as drying, the lithium-supplementing layer 32 is formed on the surface of at least one side of the base film 31, thereby obtaining the separator 3. Among them, the used lithium-supplementing slurry can contain lithium-supplementing materials such as the above-mentioned lithium-containing nanofiber compound and the polyacrylic acid-based lithium-containing binder, and can also contain other components such as the ceramic material and the surfactant.

When the lithium-supplementing slurry contains the surfactant, it is beneficial to the leveling property of the lithium-supplementing slurry coated on the surface of the base film 31, improving the surface flatness of the formed lithium-supplementing layer 32, while facilitating the wetting of the base film 31 by the lithium-supplementing slurry, improving a bonding force between the formed lithium-supplementing layer 32 and the base film 31, and enhancing the lithium supplementation effect of the separator.

Specifically, the surfactant can include one or more of a polyether siloxane copolymer, an acetylenic diol copolymer, and a fatty alcohol polyether siloxane copolymer. This facilitates compatibility with components in the lithium-supplementing layer 32 such as the lithium-containing nanofiber compound and the polyacrylic acid-based lithium-containing binder, improving the lithium supplementation effect of the separator 3, and simultaneously accommodating the improvement of the bonding force between the lithium-supplementing layer 32 and the separator 3, and properties such as the surface flatness of the lithium-supplementing layer 32.

In some embodiments, based on a total mass of the lithium-supplementing layer 32, a mass fraction of the lithium-containing nanofiber compound (i.e., a proportion of a mass of the lithium-containing nanofiber compound based on a total mass of the lithium-supplementing layer 32) may be 3% - 80%, for example 3%, 5%, 10%, 15%, 20%, 25%, 30%, 35%, 40%, 45%, 50%, 55%, 60%, 65%, 70%, 75%, 80%, or a range composed of any two thereof, for example, it can be 5% - 40%.

In some embodiments, based on a total mass of the lithium-supplementing layer 32, a mass fraction of the polyacrylic acid-based lithium-containing binder may be 2%-10%, for example 2%, 3%, 4%, 5%, 6%, 7%, 8%, 9%, 10%, or a range composed of any two thereof, for example, it can be 3% - 5%.

In some embodiments, based on a total mass of the lithium-supplementing layer 32, a mass fraction of the ceramic material may be 10%-95%, for example 10%, 15%, 20%, 25%, 30%, 35%, 40%, 45%, 50%, 55%, 60%, 65%, 70%, 75%, 80%, 75%, 90%, 92%, 95%, or a range composed of any two thereof, for example, it can be 55%-92%. In some embodiments, based on a total mass of the lithium-supplementing layer 32, a mass fraction of the surfactant may be 0.1%-0.8%, for example 0.1%, 0.2%, 0.3%, 0.4%, 0.5%, 0.6%, 0.7%, 0.8%, or a range composed of any two thereof, for example, it can be 0.1%-0.3%.

In some specific embodiments, based on a total mass of the lithium-supplementing layer 32, a mass fraction of the lithium-containing nanofiber compound may be 3%-80%, for example 3%, 5%, 10%, 15%, 20%, 25%, 30%, 35%, 40%, 45%, 50%, 55%, 60%, 65%, 70%, 75%, 80%, or a range composed of any two thereof; a mass fraction of the polyacrylic acid-based lithium-containing binder may be 2%-10%, for example 2%, 3%, 4%, 5%, 6%, 7%, 8%, 9%, 10%, or a range composed of any two thereof; a mass fraction of the ceramic material may be 10%-95%, for example 10%, 15%, 20%, 25%, 30%, 35%, 40%, 45%, 50%, 55%, 60%, 65%, 70%, 75%, 80%, 75%, 90%, 92%, 95%, or a range composed of any two thereof; a mass fraction of the surfactant may be 0.1%-0.8%, for example 0.1%, 0.2%, 0.3%, 0.4%, 0.5%, 0.6%, 0.7%, 0.8%, or a range composed of any two thereof.

By controlling contents of respective components in the lithium-supplementing layer 32 within the above ranges, it helps components such as the lithium-containing nanofiber compound and ceramic material in the lithium-supplementing layer 32 interweave to form a network structure, while achieving effective lithium supplementation. By bonding respective components using the polyacrylic acid-based lithium-containing binder, and bonding the network structure, formed by the interweaving of respective components, to the base film 31 to form an integral whole, it improves the stability of the separator 3, particularly enhancing properties such as dimensional stability of the separator 3 under high-temperature conditions, suppressing thermal shrinkage of the separator 3, avoiding problems such as battery thermal runaway caused by thermal shrinkage of the separator 3, and thereby improving battery performance such as safety and cycle life.

In an embodiment of the present application, the lithium-supplementing layer 32 may be formed on a surface of one side of the base film 31 in a thickness direction thereof, or lithium-supplementing layers 32 may be respectively formed on surfaces of opposite sides of the base film 31 in the thickness direction thereof. Where the lithium-supplementing layer 32 and the base film 31 are stacked. The thickness direction of the lithium-supplementing layer 32, the thickness direction of the base film 31, and the thickness direction of the separator 3 are parallel to each other in a direction from the lithium-supplementing layer 32 to the base film 31 (or a direction from the base film 31 to the lithium-supplementing layer 32).

In some embodiments, a thickness of the lithium-supplementing layer 32 may be 0.3 µm-4 µm, for example, 0.3 µm, 0.5 µm, 0.8 µm, 1 µm, 1.3 µm, 1.5 µm, 1.8 µm, 2 µm, 2.5 µm, 3 µm, 3.5 µm, 4 µm, or a range composed of any two thereof, and further preferably 0.5 µm - 2 µm. By controlling the thickness of the lithium-supplementing layer 32 within the above range, it is beneficial to accommodating the improvement of the lithium supplementation effect of the separator 3 and the air permeability of the separator 3, thereby improving the energy density and electrochemical performance of the battery.

In an embodiment of the present application, the thickness of the lithium-supplementing layer 32 (0.3 µm-4 µm) refers to a thickness of a single-sided lithium-supplementing layer 32 (or a thickness of a single-face lithium-supplementing layer 32). Specifically, when the surfaces of opposite sides of the base film 31 are provided with the lithium-supplementing layers 32, the thickness of the lithium-supplementing layer 32 refers to a thickness of the lithium-supplementing layer 32 on any one side, not a sum of the thicknesses of the lithium-supplementing layers 32 on both sides.

In addition, comprehensively considering film strength and energy density, the thickness of the base film 31 is preferably 3 µm-25 µm, for example, 3 µm, 5 µm, 8 µm, 10 µm, 12 µm, 15 µm, 18 µm, 20 µm, 23 µm, 25 µm, or a range composed of any two thereof, and further preferably 5 µm-12 µm.

In addition, comprehensively considering strength, voltage resistance and cycle performance, a porosity of the base film 31 is preferably 20%-90%, for example, 20%, 30%, 40%, 50%, 60%, 70%, 80%, 90%, or a range composed of any two thereof, and further preferably 30%-60%.

Specifically, the base film 31 may include one or more of a polypropylene (PP) film, a polyethylene (PE) film, a polyimide film, aramid, and a non-woven fabric; that is, the base film 31 may be a single-layer film or a composite film compounded from at least two layers of films. For example, the base film 31 may include a PP/PE/PP composite film (in the PP/PE/PP composite film, a PP film, a PE film, and a PP film are stacked sequentially). Where the non-woven fabric may specifically include polyethylene terephthalate (PET) non-woven fabric, but is not limited thereto.

The separator 3 of the embodiment of the present application can not only effectively supplement lithium for the battery, but also have good thermal stability and other properties. Studies show that a thermal shrinkage rate of the separator 3 after being heated at 180°C ± 5°C for 1 h ± 0.1 h is less than 5%, specifically less than or equal to 3%, further may be less than or equal to 2.5%, and even further may be less than or equal to 2.3%.

Specifically, after the separator 3 is heated at 180°C ± 5°C for 1 h ± 0.1 h, its thermal shrinkage rate in a length direction (MD direction) is less than 5%, specifically less than or equal to 3%, and further less than or equal to 2.3%; its thermal shrinkage rate in a width direction (TD direction) is less than 5%, specifically less than or equal to 3%, and further less than or equal to 2.3%.

An embodiment of the present application also provides a preparation method for the above separator 3, including the following steps: coating a lithium-supplementing slurry for forming the lithium-supplementing layer 32 onto a surface of at least one side of the base film 31, and drying to form the lithium-supplementing layer 32 on the surface of at least one side of the base film 31, thereby preparing the separator 3.

Specifically, the above lithium-supplementing slurry contains a lithium-supplementing material and a ceramic material, and the lithium-supplementing material includes a lithium-containing nanofiber compound and a polyacrylic acid-based lithium-containing binder.

In some embodiments, based on a total mass of solid components of the lithium-supplementing slurry, a mass fraction of the lithium-containing nanofiber compound (i.e., a proportion of a mass of the lithium-containing nanofiber compound based on a sum of masses of the lithium-containing nanofiber compound, the polyacrylic acid-based lithium-containing binder, the ceramic material, and the surfactant) may be 3%-80%, for example, 3%, 5%, 10%, 15%, 20%, 25%, 30%, 35%, 40%, 45%, 50%, 55%, 60%, 65%, 70%, 75%, 80%, or a range composed of any two thereof.

In some embodiments, based on a total mass of solid components of the lithium-supplementing slurry, a mass fraction of the polyacrylic acid-based lithium-containing binder may be 2%-10%, for example, 2%, 3%, 4%, 5%, 6%, 7%, 8%, 9%, 10%, or a range composed of any two thereof.

In some embodiments, based on a total mass of solid components of the lithium-supplementing slurry, a mass fraction of the ceramic material may be 10%-95%, for example 10%, 15%, 20%, 25%, 30%, 35%, 40%, 45%, 50%, 55%, 60%, 65%, 70%, 75%, 80%, 75%, 90%, 92%, 95%, or a range composed of any two thereof.

In some embodiments, the lithium-supplementing slurry further contains a surfactant, and based on a total mass of solid components of the lithium-supplementing slurry, a mass fraction of the surfactant may be 0.1%-0.8%, for example 0.1%, 0.2%, 0.3%, 0.4%, 0.5%, 0.6%, 0.7%, 0.8%, or a range composed of any two thereof.

In some specific embodiments, based on a total mass of the lithium-containing nanofiber compound, the polyacrylic acid-based lithium-containing binder, the ceramic material and the surfactant, a mass fraction of the lithium-containing nanofiber compound is 3%-80%, for example 3%, 5%, 10%, 15%, 20%, 25%, 30%, 35%, 40%, 45%, 50%, 55%, 60%, 65%, 70%, 75%, 80%, or a range composed of any two thereof; a mass fraction of the polyacrylic acid-based lithium-containing binder is 2%-10%, for example 3%, 5%, 10%, 15%, 20%, 25%, 30%, 35%, 40%, 45%, 50%, 55%, 60%, 65%, 70%, 75%, 80%, or a range composed of any two thereof; a mass fraction of the ceramic material is 10%-95%, for example 10%, 15%, 20%, 25%, 30%, 35%, 40%, 45%, 50%, 55%, 60%, 65%, 70%, 75%, 80%, 75%, 90%, 92%, 95%, or a range composed of any two thereof; a mass fraction of the surfactant is 0.1%-0.8%, for example 0.1%, 0.2%, 0.3%, 0.4%, 0.5%, 0.6%, 0.7%, 0.8%, or a range composed of any two thereof.

In addition, the above lithium-supplementing slurry further includes a dispersion medium, and components such as the lithium-containing nanofiber compound, the polyacrylic acid-based lithium-containing binder, the ceramic material and surfactant are dispersed in the dispersion medium to form the above lithium-supplementing slurry; where the dispersion medium may include water, and the solid components of the lithium-supplementing slurry refer to remaining components except the dispersion medium.

In specific implementation, components, such as the lithium-containing nanofiber compound, the polyacrylic acid-based lithium-containing binder, the ceramic material, and the surfactant, and the dispersion medium can be mixed and dispersed uniformly to prepare the lithium-supplementing slurry; then, the lithium-supplementing slurry may be coated on the surface of the base film 31 by using a conventional coating method in the art such as micro-gravure coating, then subjected to drying and winding, thereby preparing the separator 3.

An embodiment of the present application also provides a battery, including the above separator 3, which has advantages corresponding to the above separator 3 and will not be repeated here.

Specifically, the above battery may be a lithium-ion battery.

Specifically, the battery includes a positive electrode sheet 1, a negative electrode sheet 2 and the above separator 3, and the separator 3 is spaced between the positive electrode sheet 1 and the negative electrode sheet 2 to prevent short circuit caused by the contact between the positive electrode sheet 1 and the negative electrode sheet 2. Meanwhile, during the charge and discharge of the battery, the separator 3 allows active lithium ions to pass through, and active lithium ions pass through the separator 3 and migrate back and forth between the positive and negative electrodes to perform deintercalation in the positive and negative electrodes, realizing the charge and discharge process of the battery.

As mentioned above, the surface of the base film 31 of the above separator 3 is provided with the lithium-supplementing layer 32 that can effectively release active lithium ions during the charge and discharge of the battery. The released active lithium ions participate in the charge and discharge process of the battery to realize lithium supplementation for the battery, make up for the irreversible lithium loss generated during the charge and discharge of the battery, thereby improving the first-cycle coulombic efficiency of the battery, reducing the internal resistance of the battery, and improving the cycle performance of the battery.

Generally, the positive electrode sheet 1 includes a positive current collector 11 and a positive coating 12 arranged on a surface of at least one side of the positive current collector 11. The positive coating 12 can be arranged on a surface of one side of the positive current collector 11, or positive coatings 12 can be respectively provided on surfaces of both front and back sides of the positive current collector 11.

Specifically, the positive current collector 11 may be a conventional positive current collector 11 in the art, for example, the positive current collector 11 may include aluminum foil, but is not limited thereto.

Specifically, the positive coating 12 may include a positive active material layer, and the positive active material layer includes a positive active material, a first conductive agent and a first binder.

Where the positive active material may be a conventional positive active material in the art, for example, the positive active material includes a lithium-containing active material, and the lithium-containing active material may include one or more of nickel-cobalt-manganese ternary material (NCM), lithium iron phosphate, lithium manganese iron phosphate, lithium cobaltate, lithium nickel manganate, lithium-rich manganese-based solid solution, lithium manganate, etc.

Where the first conductive agent may be a conventional conductive material in the art, for example, the first conductive agent may include one or more of conductive carbon black (Super p), acetylene black, graphene, Ketjen black, carbon fiber, etc., but is not limited thereto.

Where the first binder may be a conventional binder material in the art, for example, the first binder may include one or more of polyvinylidene fluoride (PVDF), polyvinylidene fluoride-hexafluoropropylene copolymer (PVDF-HFP), polyvinylidene fluoride, polyvinyl fluoride, polyethylene, polypropylene, polyvinyl alcohol, carboxymethyl cellulose, hydroxypropyl cellulose, diacetyl cellulose, polyvinyl chloride, carboxylated polyvinyl chloride, ethylene oxide-containing polymers, polyvinylpyrrolidone, polyurethane, etc., but is not limited thereto.

Specifically, based on a total mass of the positive active material layer, a mass fraction of the positive active material may be 70%-99%, a mass fraction of the first conductive agent may be 0.5%-15%, and a mass fraction of the first binder may be 0.5%-15%.

In addition, the negative electrode sheet 2 includes a negative current collector 21 and a negative coating 22 located on a surface of at least one side of the negative current collector 21. The negative coating 22 can be provided on a surface of one side of the negative current collector 21, or negative coatings 22 can be respectively arranged on surfaces of both front and back sides of the negative current collector 21.
Specifically, the negative current collector 21 may be a conventional negative current collector 21 in the art, for example, the negative current collector 21 may include copper foil, but is not limited thereto.

Specifically, the negative coating 22 may include a negative active material layer, and the negative active material layer includes a negative active material, a second conductive agent and a second binder.

Where the negative active material may include graphite and/or silicon-based material, and the silicon-based material may include silicon carbon and/or a silicon oxide material, but is not limited thereto.

Where the second conductive agent may be a conventional conductive material in the art, for example, the second conductive agent may include one or more of conductive carbon black (Super P), acetylene black, Ketjen black, carbon fiber, graphene, etc., but is not limited thereto.

Where the second binder may be a conventional binder material in the art, for example, the second binder may include one or more of PVDF, carboxymethyl cellulose, styrene-butadiene rubber (SBR), polyvinyl chloride, carboxylated polyvinyl chloride, polyvinyl fluoride, ethylene oxide-containing polymers, polyvinylpyrrolidone, polyurethane, polytetrafluoroethylene, polyvinylidene fluoride, polyethylene, polypropylene, polyamide-imide, polyvinyl alcohol, sodium polyacrylate, polyacrylonitrile-based copolymer, polyacrylic acid copolymer, etc., but is not limited thereto.

Specifically, based on a total mass of the negative active material layer, a mass fraction of the negative active material may be 70%-99%, a mass fraction of the second conductive agent may be 0.5%-15%, and a mass fraction of the second binder may be 0.5%-15%.

In an embodiment of the present application, the positive electrode sheet 1 can be prepared by a conventional method in the art, for example, by a coating method. For example, a preparation process of the positive electrode sheet 1 includes: dispersing components for forming the positive coating 12 such as the positive active material, the first conductive agent and the first binder in a first solvent to prepare a positive slurry, where the first solvent includes, for example, N-methylpyrrolidone (NMP); coating the positive electrode material on the surface of the positive current collector 11, and performing processes such as drying and rolling to form the positive electrode coating 12 on the surface of the positive electrode current collector 11, thereby preparing the positive electrode sheet 1.

In an embodiment of the present application, the negative electrode sheet 2 can be prepared by a conventional method in the art, for example, by a coating method. For example, a preparation process of the negative electrode sheet 2 includes: dispersing components for forming the negative coating 22 such as the negative active material, the second conductive agent and the second binder in a second solvent to prepare a negative slurry, where the second solvent includes, for example, water (specifically deionized water); coating the negative electrode material on the surface of the negative current collector 21, and performing processes such as drying and rolling, to form the negative coating 22 on the surface of the negative current collector 21, thereby preparing the negative electrode sheet 2.

Generally, a battery includes a battery cell and an encapsulation body enclosing the battery cell, where the battery cell includes the above positive electrode sheet 1, separator 3, and negative electrode sheet 2. Where the battery cell can be a wound type battery cell, that is, the positive electrode sheet 1, separator 3, and negative electrode sheet 2 are stacked sequentially and then wound to form a wound structure battery cell (wound cell); alternatively, the battery cell can also be a stacked type battery cell (as shown in FIG. 1), that is, the battery cell includes a plurality of positive electrode sheets 1 and a plurality of negative electrode sheets 2 stacked together, where these positive electrode sheets 1 and negative electrode sheets 2 are placed in a staggered manner, and each positive electrode sheet 1 and each negative electrode sheet 2 are separated by the separators 3.

In an embodiment of the present application, the encapsulation body can be a conventional packaging material in the art. For example, the encapsulation body can include a soft packaging material (i.e., the battery can be a soft-pack battery), and the soft packaging material includes, for example, an aluminum plastic film, etc., but is not limited thereto.

In addition, the battery further includes an electrolyte, and the electrolyte may be a conventional electrolyte in the art, specifically, it may be a non-aqueous electrolyte. For example, the electrolyte may include an organic solvent, an electrolyte salt and an additive.

Where the organic solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC).

Where the electrolyte salt may include a lithium salt, and the lithium salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(oxalato)borate (LiBOB), lithium difluoro(oxalato)borate (LiDFOB), lithium bis(fluorosulfonyl)imide (LiFSI) and lithium bis(trifluoromethanesulfonyl)imide (LiTFSI).

Where the additive may include one or more of vinylene carbonate (VC), vinyl ethylene carbonate (VEC), fluoroethylene carbonate (FEC), succinonitrile (SN), adiponitrile (ADN).

In an embodiment of the present application, the battery can be prepared according to a conventional method in the art. For example, the battery is prepared by assembling the positive electrode sheet 1, the separator 3 and the negative electrode sheet 2 into a battery cell, then encapsulating the battery cell with an encapsulation body, and then performing processes such as liquid injection and formation. These processes are conventional operations in battery preparation process in the art, and are not particularly limited herein.

The present application is further described below through specific examples.

### Preparation of positive electrode sheet

A nickel-cobalt-manganese type 811 ternary material, Super P, and PVDF were mixed in a mass ratio of 96:2:2 and added to NMP to prepare a positive electrode slurry;
the positive electrode slurry was coated on both front and back surfaces of an aluminum foil, and after drying and rolling, positive electrode active material layers were formed on the front and back surfaces of the aluminum foil respectively, thereby preparing the positive electrode sheet.

### Preparation of negative electrode sheet

Graphite, SiO, Super P, CMC, and a polyacrylic acid copolymer were mixed in a mass ratio of 85:10:1:1:3 and added to deionized water to prepare a negative electrode slurry;
the negative electrode slurry was coated on both front and back surfaces of a copper foil, and after drying and rolling, negative electrode active material layers were formed on the front and back surfaces of the copper foil respectively, thereby preparing the negative electrode sheet.

### Preparation of separator

(1) A lithium-containing nanofiber compound, a polyacrylic acid-based lithium-containing binder, aluminum oxide, a polyether siloxane copolymer and water were mixed and dispersed uniformly to obtain a lithium-supplementing slurry;
   based on a total mass of the lithium-containing nanofiber compound, polyacrylic acid-based lithium-containing binder, ceramic material (aluminum oxide) and surfactant (polyether siloxane copolymer), mass fractions of respective components (also mass fractions of respective components in the formed lithium-supplementing layer) are as follows: a mass fraction of the lithium-containing nanofiber compound is 10%, a mass fraction of the polyacrylic acid-based lithium-containing binder is 4%, a mass fraction of aluminum oxide is 86%, and a mass fraction of the polyether siloxane copolymer is 0.2%.

Where the lithium-containing nanofiber compound is lithium carboxylate-modified cellulose nanowhiskers with an average diameter of 20 nm, an average length of 200 nm and a lithium content of 11000 ppm.

Where the polyacrylic acid-based lithium-containing binder is obtained by neutralizing a copolymer of methacrylic acid and acrylamide with LiOH, a mass ratio of methacrylic acid to acrylamide is 8:2, and a lithium element content in the polyacrylic acid-based lithium-containing binder is 16000 ppm.

Where a particle size D95 of aluminum oxide is 100 nm.

(2) The lithium-supplementing slurry was coated on two opposite surfaces of a base film (PE film), and after drying, lithium-supplementing layers were respectively formed on two opposite surfaces of the base film to prepare a separator; where a thickness of the base film is 9 µm, a porosity of the base film is 48%, and a thickness of a single-sided lithium-supplementing layer is 1 µm.

### Preparation of battery

The positive electrode sheet, separator, and negative electrode sheet were stacked in sequence and assembled into a stacked type battery cell, the stacked type battery cell was placed in an aluminum plastic film, and then after processes such as liquid injection and formation, a lithium-ion battery was prepared.

Where the electrolyte composition used is as follows: organic solvents are DMC, EMC, EC, DEC and PC, a volume ratio of DMC, EMC, EC, DEC, and PC is 15:35:35:10:5 (i.e., DMC:EMC:EC:DEC:PC = 15:35:35:10:5 (vol)), and a mass content of LiPF₆ in the electrolyte is 11%.

Comparative Example 1: differences from Example 1 lies in: (1) sodium carboxylate-modified cellulose nanowhiskers (lithium element content is 0) is used to replace the lithium carboxylate-modified cellulose nanowhiskers; (2) a polyacrylic acid-based binder (lithium element content is 0) is used to replace the polyacrylic acid-based lithium-containing binder, where the polyacrylic acid-based binder does not contain lithium element (i.e., the polyacrylic acid-based binder is not neutralized with LiOH); details are shown in Table 1 and Table 2. Except for the differences shown in Table 1 and Table 2, other conditions are the same as those in Example 1.

Examples 2 to 18 and Comparative Example 2: differences from Example 1 lies in those conditions such as type, content, lithium element content of each component in the lithium-supplementing layer are different, specifically as shown in Table 1 and Table 2. Except for the differences shown in Table 1 and Table 2, other conditions are the same as those in Example 1.

The performances of the separators and batteries of respective examples and comparative examples were tested according to the following processes respectively, and the performance test results of the separators and batteries are shown in Table 3.
(1) Test of separator thermal shrinkage rate: each separator was cut to a size of 160mm×130mm, where its length direction is MD direction, and its width direction is TD direction; in the middle of the separator, a square frame with a size of 100mm×100mm is drawn using a pen (both length L₀ and width W₀ of the square frame are 100mm), the separator is covered with 5 sheets of A4 paper on each of the two opposite surfaces of the separator in its thickness direction, and then the separator was placed in an oven at 180°C, heated at 180°C for 1h and taken it out. the size of the square frame is measured, recording its width as W1 and length as L1, then the thermal shrinkage rate of the separator in the MD direction = (L₀-L₁)/L₀, and the thermal shrinkage rate of the separator in the TD direction = (W₀-W₁)/W₀;
(2) test of battery internal resistance: in a 25°C environment, each battery was charged to 50% SOC at 0.2C, and battery internal resistance was measured with a battery internal resistance tester, and the obtained data is battery internal resistance;
(3) test of battery first-cycle coulombic efficiency: in a 25°C environment, the capacity of each battery after first-cycle full charge (charged at 0.2C) is recorded as Q1, and the capacity after the first-cycle full discharge (discharged at 0.2C) is recorded as Q2, the first-cycle coulombic efficiency = Q2/Q1×100%;
(4) test of battery capacity retention rate after 500 cycles at 25°C: in a 25°C environment, each battery was charged at a constant current and constant voltage at 0.8C (0.05C cutoff), and discharged at a constant current at 1.0C (2.7V-4.3V), the discharge capacity after first cycle is recorded as Q3, and the discharge capacity after 500 cycles is recorded as Q4, the capacity retention rate = Q4/Q3×100%.

**Table 1 Thickness, lithium element content and composition of lithium-supplementing layer**

| Example | Thickness of single-sided lithium-supplementing layer / µm | Lithium element content in lithium-supplementing layer / ppm | Mass fraction of each component in lithium- supplementing layer | | | | Ceramic material | | Surfactant |
|---|---|---|---|---|---|---|---|---|---|
| | | | Lithium-containing nanofiber compound | Polyacrylic acid-based lithium-containing binder | Ceramic material | Surfactant | Type | Particle size D95 / nm | |
| Example 1 | 1 | 880 | 10.0% | 4.0% | 85.8% | 0.2% | Aluminum oxide | 100 | Polyether siloxane copolymer |
| Example 2 | 1 | 480 | 10.0% | 4.0% | 85.8% | 0.2% | Aluminum oxide | 100 | Polyether siloxane copolymer |
| Example 3 | 1 | 400 | 10.0% | 4.0% | 85.8% | 0.2% | Aluminum oxide | 100 | Polyether siloxane copolymer |
| Example 4 | 1 | 520 | 10.0% | 4.0% | 85.8% | 0.2% | Aluminum oxide | 100 | Polyether siloxane copolymer |
| Example 5 | 1 | 2800 | 10.0% | 4.0% | 85.8% | 0.2% | Aluminum oxide | 100 | Polyether siloxane copolymer |
| Example 6 | 1 | 4200 | 10.0% | 4.0% | 85.8% | 0.2% | Aluminum oxide | 100 | Polyether siloxane copolymer |
| Example 7 | 1 | 4120 | 20.0% | 4.0% | 75.8% | 0.2% | Aluminum oxide | 100 | Acetylenic diol copolymer |
| Example 8 | 1 | 9940 | 50.0% | 8.0% | 41.8% | 0.2% | Aluminum oxide | 100 | Fatty alcohol polyether siloxane copolymer |
| Example 9 | 1 | 12000 | 60.0% | 10.0% | 29.8% | 0.2% | Aluminum oxide | 100 | Polyether siloxane copolymer |
| Example 10 | 1 | 880 | 10.0% | 4.0% | 85.8% | 0.2% | Aluminum oxide | 100 | Polyether siloxane copolymer |
| Example 11 | 1 | 880 | 10.0% | 4.0% | 85.8% | 0.2% | Aluminum oxide | 100 | Polyether siloxane copolymer |
| Example 12 | 1 | 880 | 10.0% | 4.0% | 85.8% | 0.2% | Aluminum oxide | 100 | Polyether siloxane copolymer |
| Example 13 | 1 | 880 | 10.0% | 4.0% | 85.8% | 0.2% | Aluminum oxide | 400 | Fatty alcohol polyether siloxane copolymer |
| Example 14 | 1 | 880 | 10.0% | 4.0% | 85.8% | 0.2% | Aluminum oxide | 500 | Polyether siloxane copolymer |
| Example 15 | 1 | 880 | 10.0% | 4.0% | 85.8% | 0.2% | Boehmite | 100 | Polyether siloxane copolymer |
| Example 16 | 1 | 880 | 10.0% | 4.0% | 85.8% | 0.2% | Barium titanate | 100 | Polyether siloxane copolymer |
| Example 17 | 1 | 880 | 10.0% | 4.0% | 85.8% | 0.2% | Aluminum oxide | 100 | Polyether siloxane copolymer |
| Example 18 | 1.5 | 880 | 10.0% | 4.0% | 85.8% | 0.2% | Aluminum oxide | 100 | Polyether siloxane copolymer |
| Comparative Example 1 | 1 | 0 | 10.0% | 4.0% | 85.8% | 0.2% | Aluminum oxide | 100 | Polyether siloxane copolymer |
| Comparative Example 2 | 1 | 70 | 10.0% | 4.0% | 85.8% | 0.2% | Aluminum oxide | 100 | Polyether siloxane copolymer |

**Table 2 Relevant parameters of lithium-containing nanofiber compound and polyacrylic acid-based lithium-containing binder**

| Example | Lithium-containing nanofiber compound | | | | Polyacrylic acid-based lithium-containing binder | |
|---|---|---|---|---|---|---|
| | Lithium element content / ppm | Type | Average diameter / nm | Average length / nm | Lithium element content / ppm | Monomer type and mass ratio thereof |
| Example 1 | 4000 | Lithium carboxylate-modified cellulose nanowhisker | 40 | 1000 | 12000 | Methacrylic acid: Acrylamide = 7:3 |
| Example 2 | 0 | Sodium carboxylate-modified cellulose nanowhisker | 40 | 1000 | 12000 | Methacrylic acid: Acrylamide = 7:3 |
| Example 3 | 4000 | Lithium carboxylate-modified cellulose nanowhisker | 40 | 1000 | 0 | Methacrylic acid: Acrylamide = 7:3 |
| Example 4 | 2000 | Lithium carboxylate-modified cellulose nanowhisker | 40 | 1000 | 8000 | Methacrylic acid: Acrylamide = 7:3 |
| Example 5 | 20000 | Lithium sulfonate-modified cellulose nanofiber | 40 | 1000 | 20000 | Methacrylic acid: Acrylamide = 7:3 |
| Example 6 | 30000 | Lithium sulfonate-modified cellulose nanowhisker | 40 | 1000 | 30000 | Methacrylic acid: Acrylamide = 7:3 |
| Example 7 | 17000 | Lithium carboxylate-modified cellulose nanowhisker | 40 | 1000 | 18000 | Methacrylic acid: Acrylamide = 7:3 |
| Example 8 | 17000 | Lithium carboxylate-modified cellulose nanowhisker | 40 | 1000 | 18000 | Methacrylic acid: Acrylamide = 7:3 |
| Example 9 | 17000 | Lithium carboxylate-modified cellulose nanowhisker | 40 | 1000 | 18000 | Methacrylic acid: Acrylamide = 7:3 |
| Example 10 | 4000 | Lithium carboxylate-modified cellulose nanowhisker | 40 | 1000 | 12000 | Methacrylic acid: Acrylamide = 9:1 |
| Example 11 | 4000 | Lithium carboxylate-modified cellulose nanowhisker | 40 | 1000 | 12000 | Acrylic acid: N-hydroxymethylacrylamide = 5:5 |
| Example 12 | 4000 | Lithium carboxylate-modified cellulose nanowhisker | 40 | 1000 | 12000 | Acrylic acid: Methacrylamide = 1:9 |
| Example 13 | 4000 | Lithium carboxylate-modified cellulose nanowhisker | 40 | 1000 | 12000 | Methacrylic acid: Acrylamide = 7:3 |
| Example 14 | 4000 | Lithium carboxylate-modified cellulose nanowhisker | 40 | 1000 | 12000 | Methacrylic acid: Acrylamide = 7:3 |
| Example 15 | 4000 | Lithium carboxylate-modified cellulose nanowhisker | 40 | 1000 | 12000 | Methacrylic acid: Acrylamide = 7:3 |
| Example 16 | 4000 | Lithium carboxylate-modified cellulose nanowhisker | 40 | 1000 | 12000 | Methacrylic acid: Acrylamide = 7:3 |
| Example 17 | 4000 | Lithium carboxylate-modified cellulose nanowhisker | 200 | 5000 | 12000 | Methacrylic acid: Acrylamide = 7:3 |
| Example 18 | 4000 | Lithium carboxylate-modified cellulose nanowhisker | 800 | 10000 | 12000 | Methacrylic acid: Acrylamide = 7:3 |
| Comparative Example 1 | 0 | Sodium carboxylate-modified cellulose nanowhisker | 40 | 1000 | 0 | Methacrylic acid: Acrylamide = 7:3 |
| Comparative Example 2 | 500 | Lithium carboxylate-modified cellulose nanowhisker | 40 | 1000 | 500 | Methacrylic acid: Acrylamide = 7:3 |

**Table 3 Performance test results of separator and battery**

| Example | Thermal shrinkage rate (%) at 180°C for 1h | | First-cycle coulombic efficiency (%) | Battery internal resistance (mΩ) | Capacity retention rate at 25°C (%) |
|---|---|---|---|---|---|
| | MD direction | TD direction | | | |
| Example 1 | 1.2 | 1 | 84.1 | 17.1 | 85.2 |
| Example 2 | 1.4 | 1.3 | 82.2 | 18.3 | 82.8 |
| Example 3 | 1.5 | 1.2 | 81.8 | 18.5 | 82.6 |
| Example 4 | 1.3 | 1.2 | 83.4 | 17.7 | 84.3 |
| Example 5 | 1.1 | 1 | 86.4 | 16.3 | 87.3 |
| Example 6 | 1.1 | 0.9 | 82.6 | 18.1 | 83.5 |
| Example 7 | 1 | 0.8 | 87.1 | 15.1 | 88.7 |
| Example 8 | 0.9 | 0.7 | 88.5 | 14.2 | 90.3 |
| Example 9 | 1 | 0.8 | 81.6 | 18.2 | 82.2 |
| Example 10 | 1.2 | 1 | 84.9 | 16.8 | 86.9 |
| Example 11 | 1.2 | 1.1 | 83.5 | 17.3 | 85.8 |
| Example 12 | 1.2 | 1.1 | 83.7 | 17.1 | 86.1 |
| Example 13 | 2 | 1.8 | 84.1 | 17.1 | 85.2 |
| Example 14 | 3.2 | 3.6 | 83.1 | 17.6 | 85.3 |
| Example 15 | 2.5 | 2.2 | 84 | 16.9 | 85.3 |
| Example 16 | 2 | 1.7 | 84.6 | 16.4 | 86 |
| Example 17 | 3.8 | 4 | 84 | 16.9 | 85.2 |
| Example 18 | 5.2 | 5.3 | 83.7 | 17.1 | 85.1 |
| Comparative Example 1 | 1.5 | 1.3 | 78.5 | 21.3 | 78.6 |
| Comparative Example 2 | 1.8 | 1.5 | 79.1 | 20.6 | 79 |

It can be seen that compared with Comparative Example 1 and Comparative Example 2, the lithium element content in the lithium-supplementing layer of the separator in Examples 1-18 is within a range of 100ppm-20000ppm, which can effectively perform lithium supplementation for batteries, reduce battery internal resistance, and increase the first-cycle coulombic efficiency and capacity retention rate of batteries.

Furthermore, compared with Example 2, Example 3, and Example 9, the lithium element content in the lithium-supplementing layer of the separator in Example 1 and Examples 4-6 is further controlled within a range of 500ppm-10000ppm, which is more conducive to effectively supplementing lithium for batteries, thereby further reducing battery internal resistance, and increasing the first-cycle coulombic efficiency and capacity retention rate of batteries.

Furthermore, compared with Example 14, the particle size D95 of the ceramic material in the lithium-supplementing layer of the separator in Example 1 is further controlled to be ≤ 400nm, which is conducive to further reducing the thermal shrinkage rate of the separator and improving the heat resistance of the separator while maintaining the reduced battery internal resistance and the relatively high first-cycle coulombic efficiency and capacity retention rate.

Furthermore, compared with Example 18, the average diameter of the lithium-containing nanofiber compound in the lithium-supplementing layer of the separator in Example 1 and Example 7 is further controlled within a range of 5nm-200nm and the average length thereof is further controlled within a range of 100nm-5µm, which is conducive to further reducing the thermal shrinkage rate of the separator and improving the heat resistance of the separator while reducing battery internal resistance and increasing the first-cycle coulombic efficiency and capacity retention rate of batteries.

The above provides descriptions of the embodiments of the present application. However, the present application is not limited to the above embodiments. Any modification, equivalent replacement, improvement, etc., made within the spirit and principles of the present application shall be included in the scope of protection of the present application.

## Claims

1. A separator, comprising a base film and a lithium-supplementing layer located on a surface of at least one side of the base film, wherein a lithium element content in the lithium-supplementing layer is 100ppm-20000ppm.

2. The separator according to claim 1, wherein the lithium element content in the lithium-supplementing layer is 500ppm-10000ppm.

3. The separator according to claim 1, wherein the lithium-supplementing layer comprises a lithium-containing nanofiber compound;
preferably, the lithium-containing nanofiber compound comprises one or more of lithium sulfonate-modified cellulose nanowhiskers, lithium carboxylate-modified cellulose nanowhiskers, lithium sulfonate-modified cellulose nanofibers, lithium carboxylate-modified cellulose nanofibers, lithium sulfonate-modified bacterial cellulose, lithium carboxylate-modified bacterial cellulose, lithium sulfonate-modified micronized-fibrous cellulose, and lithium carboxylate-modified micronized-fibrous cellulose;
preferably, a lithium element content in the lithium-containing nanofiber compound is 50 ppm-30000 ppm, preferably 500 ppm-20000 ppm;
preferably, an average diameter of the lithium-containing nanofiber compound is 2 nm-1 µm, preferably 5 nm-200 nm;
preferably, an average length of the lithium-containing nanofiber compound is 50 nm-10 µm, preferably 100 nm-5 µm;
preferably, based on a total mass of the lithium-supplementing layer, a mass fraction of the lithium-containing nanofiber compound is 3%-80%.

4. The separator according to claim 1, wherein the lithium-supplementing layer comprises a polyacrylic acid-based lithium-containing binder;
preferably, a lithium element content in the polyacrylic acid-based lithium-containing binder is 100 ppm-30000 ppm, preferably 500 ppm-20000 ppm;
preferably, the polyacrylic acid-based lithium-containing binder comprises an acrylic acid-based structural unit and an acrylamide-based structural unit;
preferably, the acrylic acid-based structural unit comprises one or more of an acrylic acid structural unit, a methacrylic acid structural unit, an itaconic acid structural unit, and an aconitic acid structural unit;
preferably, the acrylamide-based structural unit comprises one or more of an acrylamide structural unit, a methacrylamide structural unit, an N,N-dimethylacrylamide structural unit, and an N-hydroxymethylacrylamide structural unit;
preferably, the polyacrylic acid-based lithium-containing binder is prepared by reacting a copolymer of an acrylic acid-based monomer and an acrylamide-based monomer with a lithium source;
preferably, a mass ratio of the acrylic acid-based monomer to the acrylamide-based monomer is 1:9-9:1, preferably 5:5-9:1;
preferably, the lithium source comprises lithium hydroxide;
preferably, based on the total mass of the lithium-supplementing layer, a mass fraction of the polyacrylic acid-based lithium-containing binder is 2%-10%.

5. The separator according to claim 1, wherein the lithium-supplementing layer comprises a ceramic material;
preferably, the ceramic material comprises one or more of aluminum oxide, boehmite, barium titanate, aluminum nitride, silicon oxide, magnesium oxide, and magnesium hydroxide;
preferably, a particle size D95 of the ceramic material is ≤ 400nm;
preferably, based on the total mass of the lithium-supplementing layer, a mass fraction of the ceramic material is 10%-95%.

6. The separator according to claim 1, wherein the lithium-supplementing layer comprises a surfactant;
preferably, the surfactant comprises one or more of a polyether siloxane copolymer, an acetylenic diol copolymer, and a fatty alcohol polyether siloxane copolymer;
preferably, based on the total mass of the lithium-supplementing layer, a mass fraction of the surfactant is 0.1%-0.8%.

7. The separator according to any one of claims 1 to 6, wherein a thickness of the lithium-supplementing layer is 0.3µm-4µm, preferably 0.5µm-2µm.

8. The separator according to any one of claims 1 to 6, wherein a thickness of the base film is 3µm-25µm, preferably 5µm-12µm.

9. The separator according to any one of claims 1 to 6, wherein a porosity of the base film is 20%-90%, preferably 30%-60%.

10. The separator according to any one of claims 1 to 6, wherein the base film comprises one or more of a polypropylene film, a polyethylene film, a polyimide film, aramid, and a non-woven fabric.

11. The separator according to any one of claims 1 to 6, wherein a thermal shrinkage rate of the separator after being heated at 180°C ± 5°C for 1h ± 0.1h is less than 5%.

12. A preparation method for the separator according to any one of claims 1 to 11, comprising the following steps: coating a lithium-supplementing slurry for forming the lithium-supplementing layer onto the surface of at least one side of the base film, and drying to form the lithium-supplementing layer on the surface of at least one side of the base film, thereby obtaining the separator.

13. The preparation method for the separator according to claim 12, wherein the lithium-supplementing slurry contains the lithium-containing nanofiber compound, the polyacrylic acid-based lithium-containing adhesive, the ceramic material, and the surfactant;
preferably, based on a total mass of the lithium-containing nanofiber compound, polyacrylic acid-based lithium-containing adhesive, ceramic material, and surfactant, a mass fraction of the lithium-containing nanofiber compound is 3%-80%, a mass fraction of the polyacrylic acid-based lithium-containing adhesive is 2%-10%, a mass fraction of the ceramic material is 10%-95%, and a mass fraction of the surfactant is 0.1%-0.8%.

14. A battery, comprising the separator according to any one of claims 1 to 11.
